Europäisches Patentamt

European Patent Office

Office européen des brevets

(11) Veröffentlichungsnummer : **0 118 464**
**B1**

(12) EUROPÄISCHE PATENTSCHRIFT

(45) Veröffentlichungstag der Patentschrift :
28.05.86

(51) Int. Cl.⁴ : **B 65 G   7/06**

(21) Anmeldenummer : 83902529.3

(22) Anmeldetag : 05.08.83

(86) Internationale Anmeldenummer :
PCT/EP 83/00212

(87) Internationale Veröffentlichungsnummer :
WO/8400740 (01.03.84 Gazette 84/06)

(54) VORRICHTUNG ZUM TRAGEN UND TRANSPORTIEREN VON LASTEN MIT EINER STÜTZPLATTE UND EINER LUFTKISSENEINRICHTUNG.

(30) Priorität : 18.08.82 DE 3230753

(43) Veröffentlichungstag der Anmeldung :
19.09.84 Patentblatt 84/38

(45) Bekanntmachung des Hinweises auf die Patenterteilung : 28.05.86 Patentblatt 86/22

(84) Benannte Vertragsstaaten :
AT BE CH DE FR GB LI LU NL SE

(56) Entgegenhaltungen :
FR-A- 1 577 166
GB-A- 1 210 261
GB-A- 1 491 100

(73) Patentinhaber : MICHELS, Hartwig
Steinplattenweg 10
D-8500 Nürnberg (DE)

KLINGLER, Knud
Treitschkestrasse 13
D-8500 Nürnberg (DE)

(72) Erfinder : MICHELS, Hartwig
Steinplattenweg 10
D-8500 Nürnberg (DE)
Erfinder : KLINGLER, Knud
Treitschkestrasse 13
D-8500 Nürnberg (DE)

(74) Vertreter : Patentanwälte Zellentin et al
Zweibrückenstrasse 15
D-8000 München 2 (DE)

EP 0 118 464 B1

**Beschreibung**

Die Erfindung betrifft eine Vorrichtung zum Tragen und Transportieren von Lasten mit einer Stützplatte und einer Luftkisseneinrichtung, die aus einem flexiblen, durch Zufuhr eines Druckmittels aufblähbaren Dämpfungsring, der an der Stützplatte entlang einer kreisförmigen Berührungslinie abgedichtet befestigt ist, und einer zwischen der Stützplatte, dem aufgeblähten Dämpfungsring und der Auflagefläche gebildeten Auftriebskammer besteht, wobei die Kammer des Dämpfungsrings mindestens eine Öffnung aufweist, durch die sie mit der Auftriebskammer kommuniziert, aus der im Betriebszustand das Druckmittel zwischen dem Dämpfungsring und der Auflagefläche, einen Fluidfilm bildend, austritt.

Eine derartige Vorrichtung ist aus der DE-AS-19 48 304 bekannt. Diese Vorrichtungen erfordern praktisch ebene, sehr glatte Auflageflächen. Um Unebenheiten, kleinere Risse und andere Ungleichmäßigkeiten in der Auflagefläche ausgleichen zu können, ist wegen der schmalen, nur wenige Millimeter breiten ringförmigen Gleitoberfläche, die bei Unebenheiten ein schnelleres Abströmen des Druckmittels bewirkt, ein großer Druckmittel- und damit auch Energieverbrauch erforderlich. Probleme ergeben sich auch dann, wenn der Druck des ausströmenden Druckmittels in größeren Bereichen schwankt, wie das z. B. beim Übergang von ebenen auf unebene, von glatten auf rauhe oder poröse Auflageflächen zu beobachten ist. Hierbei kommt es häufig zu unerwünschten zyklischen Hüpfbewegungen durch Eigenschwingungen der Vorrichtung.

Außerdem treten hochfrequente Schwingungen auf, die mit großer Lärmbelästigung einhergehen. Beim Überfahren von Rissen und Stufen kommt es durch das dadurch bedingte schnelle Ausströmen des Druckmittels oftmals zum Kippeffekt, d. h. der Dämpfungsring liegt dann fest an der Auflagefläche an und bei der Weiterfahrt mit den benachbarten Vorrichtungen besteht die Gefahr, daß er nach innen gestülpt und dann auch zerrissen bzw. von der Stützplatte abgelöst wird, so daß die gesamte Transportvorrichtung ausfallen kann.

Ein weiterer Nachteil der bekannten Vorrichtungen ist die geringe Hubmöglichkeit, so daß Lasten nicht oder nur sehr schwer unterfahren werden können.

Wenn höhere Drücke verwendet werden, muß die Wandung des Dämpfungsrings aus einem fluiddichten, sehr festen, wenig elastischen Material bestehen. Die größte Belastung ist hierbei vom äußeren Umfangsrand aufzunehmen. Wird dieser Rand durch geschlossene Metallringe, die radiale Auslenkungen verhindern, verstärkt, ergeben sich auch bei nur geringen Änderungen des Druckzustands hochfrequente geräuschvolle Schwingungen.

Aufgabe der Erfindung ist es, eine Vorrichtung gemäß dem Oberbegriff des Anspruchs 1 dahingehend zu verbessern, daß auch Unebenheiten, wie Erhebungen und Vertiefungen als auch kleinere Risse und rauhe und leicht poröse Auflageflächen auch im Wechsel mit ebenen und glatten Auflageflächen ohne wesentliche Erhöhung des Druckmittel- und damit Energieverbrauchs überfahren werden können, wobei gleichzeitig selbsterregte Schwingungen, die zum Hüpfen führen, und ein Flattern der Wandung des Blähkörpers, das mit Geräuschbildung verbunden ist, vermieden werden. Außerdem soll es die Vorrichtung ermöglichen, die Hubhöhe in Abhängigkeit von der Durchflußmenge regeln zu können. Aufgabe der Erfindung ist es auch, eine Vorrichtung anzugeben, bei der der Kippeffekt vermieden wird.

Die Aufgaben werden durch eine Vorrichtung mit den Merkmalen des Anspruchs 1 bzw. des Anspruchs 15 gelöst.

Vorteilhafte Ausgestaltungen der Erfindung sind den Unteransprüchen zu entnehmen.

Durch die unterschiedliche Materialwahl bei der Wandung des Dämpfungsrings, außen ein praktisch undehnbares, hochfestes fluiddichtes Material, das hohe Druckkräfte aufnehmen kann, und dem dehnbaren Material der Trennwand zur Auftriebskammer kann der Dämpfungsring sein Volumen entsprechend der Druckmittelzufuhr und -abströmung leicht verändern, was gleichzeitig - wegen der gemeinsamen Trennwand - eine Volumenvergrößerung bzw. Verkleinerung der Auftriebskammer bewirkt. Die Erregung von Eigenschwingungen und ein Flattern des Blähkörpers wird dadurch weitgehend vermieden. Die auslenkbare breite Abdichtungsfläche zur Auflagefläche kann sich an Bodenunebenheiten anpassen, so daß der gebildete Fluidfilm in seiner Stärke und damit bezüglich des erforderlichen Drucks sich nahezu nicht verändert, es kann kein zusätzliches Abströmen erfolgen, das eine erhöhte Druckmittelzufuhr erfordern würde. Diese breite Abdichtungsfläche bildet praktisch eine Art Labyrinthdichtung, wodurch Rauhigkeiten, Stufen, Risse und andere Unregelmäßigkeiten einer Auflagefläche bei minimalem Druckmittel- bzw. Energieverbrauch ausgeglichen werden können.

Durch die bezüglich der Dehnbarkeit unterschiedliche Ausführung der Wandung des Dämpfungsrings ist auch in Abhängigkeit von der Druckmittelzufuhr eine optimale Hubhöhe gewährleistet.

Durch einen erfindungsgemäßen Ring innerhalb der Dämpfungskammer kann sich diese nicht mehr nach innen stülpen, so daß auch der Kippeffekt vermieden wird.

Die Vorrichtung kann auch bei einem Druck unter 1 bar und über 4 bar arbeiten. Versuche haben ergeben, daß bekannte Vorrichtungen im Vergleich mit der erfindungsgemäßen bis zu 50 % mehr Druckmittel verbrauchen.

Nachstehend wird die Erfindung anhand von Ausführungsbeispielen unter Bezug auf Zeichnungen näher erläutert. Es zeigt:

Figur 1 ein erstes Ausführungsbeispiel im radialen Schnitt, bei dem in der linken Hälfte eine aufgeblähte Dämpfungskammer und in der rechten Hälfte die Ruhestellung dargestellt sind,

Figur 2 ein zweites Ausführungsbeispiel im radialen Schnitt durch eine Hälfte,

Figur 3 ein drittes Ausführungsbeispiel im radialen Schnitt durch eine Hälfte,

Figur 4 ein viertes Ausführungsbeispiel im radialen Schnitt durch eine Hälfte,

Figur 5 einen Ausschnitt der Draufsicht von unten auf das Ausführungsbeispiel gemäß Fig. 4,

Figur 6 ein einfaches Ausführungsbeispiel mit einem Ring als Scheibe.

In allen dargestellten Ausführungsbeispielen haben gleiche Teile gleiche Bezugsziffern und werden nur einmal erläutert.

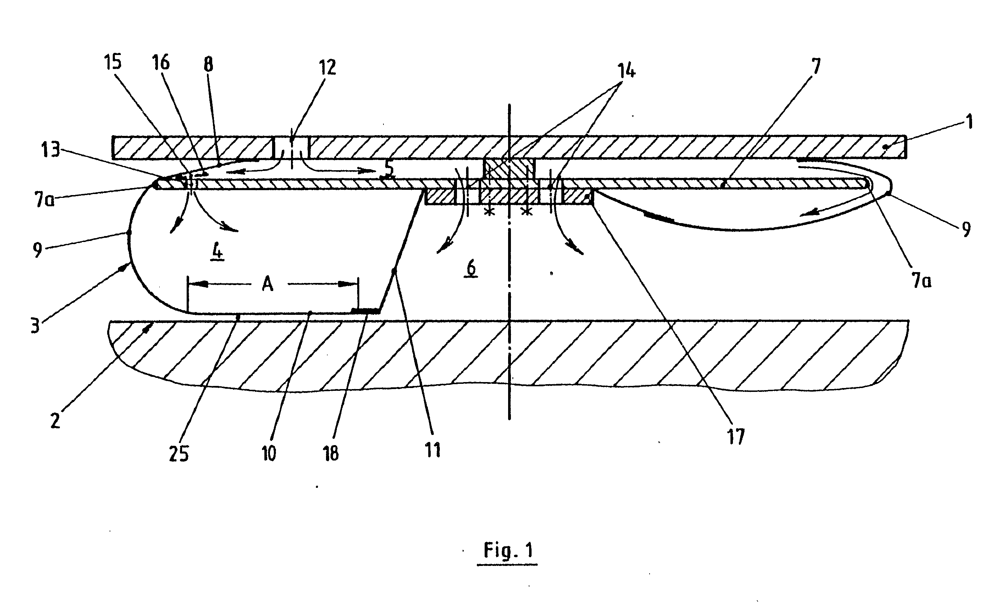

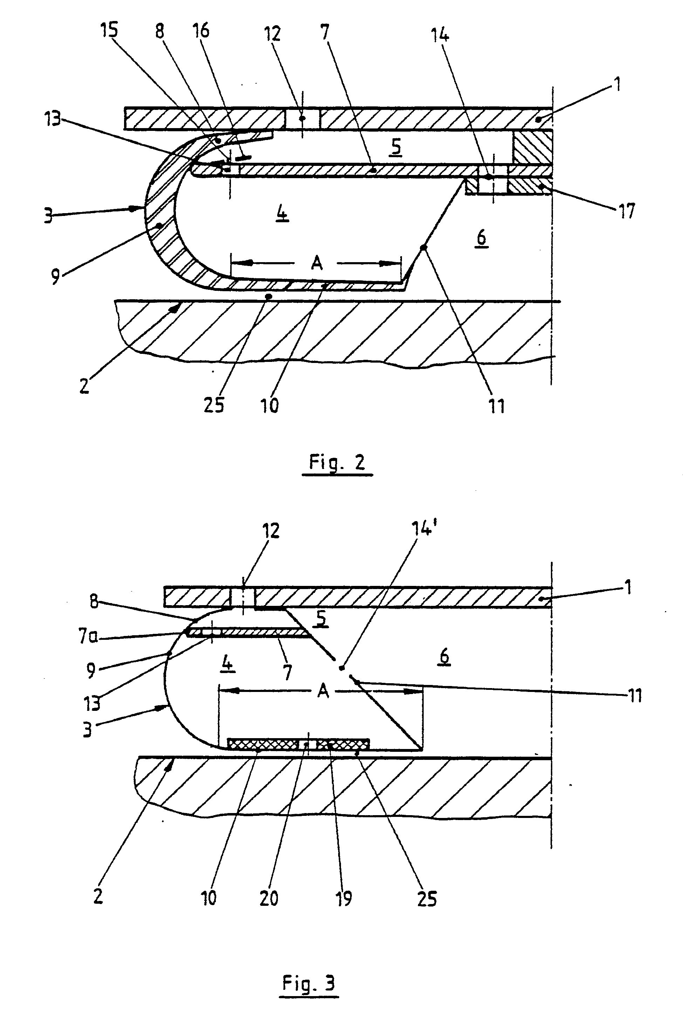

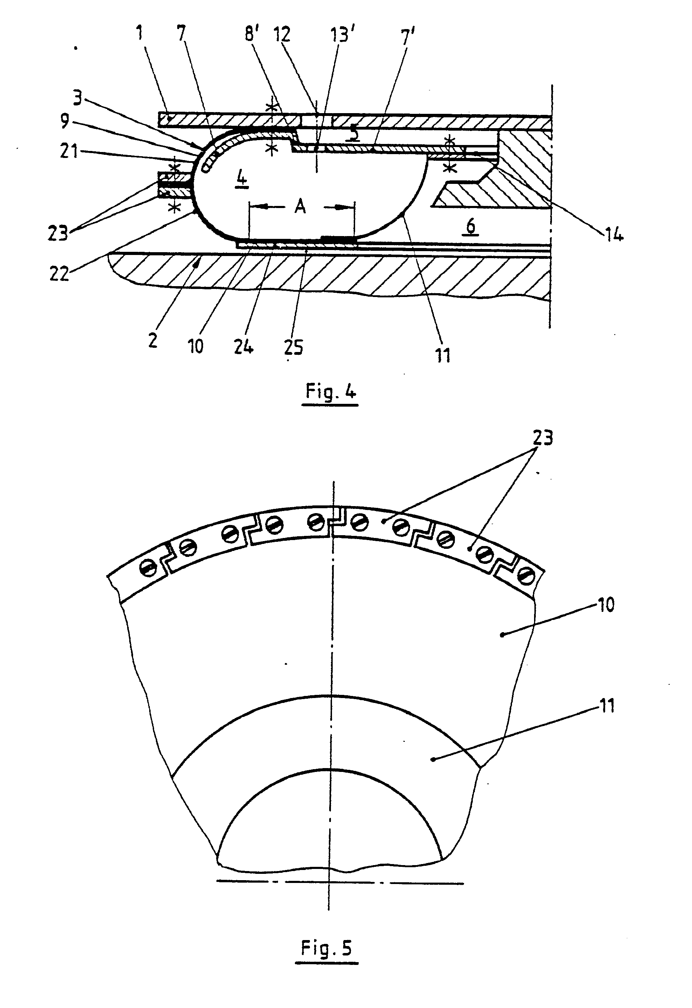

Die in Fig. 1 und 2 dargestellten Vorrichtungen weisen eine Stützplatte 1 auf, auf der direkt oder auf einer mit ihr verbundenen, nicht dargestellten Tragplatte eine Last aufliegt. Die Stütz- bzw. Tragplatte· weist nicht dargestellte, bekannte Stützen auf, die die jeweilige lasttragende Plattform im Ruhezustand der Vorrichtung auf einer Auflagefläche 2 abstützt. (In Fig. 4 ist eine zentrale Stütze angedeutet).

Unterhalb der Stützplatte 1 sind ein blähbarer Dämpfungsring 3, der eine Dämpfungsringkammer 4 einschließt, eine scheibenförmige Verbindungskammer 5 und eine Auftriebskammer 6 angeordnet. Die Dämpfungsringkammer 4 wird in diesen Beispielen durch eine Ringscheibe 7, die zusammen mit der Seitenwand 8 und der Stützplatte 1 die Verbindungskammer 5 begrenzt, sowie eine seitliche Außenwandung 9, eine Bodenwandung 10 sowie eine innere Trennwand 11 zur Auftriebskammer 6 begrenzt. Die Auftriebskammer 6 wird durch den zentralen Teil der Ringscheibe 7, die Trennwand 11 und die Auflagefläche 2 begrenzt.

In der Stützplatte 1, die die Verbindungskammer 5 nach oben abschließt, ist eine Bohrung 12 ausgeführt. Durch diese Bohrung 12 kann von einer nicht dargestellten Druckmittelquelle und durch nicht dargestellte Verbindungsleitungen ein Druckmittel in die Verbindungskammer 5 zugeführt werden. Die Verbindungskammer 5 steht durch mindestens eine Öffnung 13 in der Ringscheibe 7 direkt mit der Dämpfungsringkammer 4 und durch mindestens eine weitere Öffnung 14 in der Ringscheibe 7 direkt mit der Auftriebskammer 6 in Verbindung.

Die Öffnung 13 in der Ringscheibe 7 ist außerhalb der Berührungslinie des Dämpfungsrings 3 an der Stützplatte 1 angeordnet. Sie kann aber auch in der Verlängerung der Achse der Bohrung 12 für die Druckmittelzufuhr zentrisch zu ihr oder auch exzentrisch innerhalb der Berührungslinie angeordnet werden. Die Ringscheibenöffnung 13 weist an der Seite der Verbindungskammer 5 eine auslenkbare Drosselklappe 15 mit einer, die Ringscheibenöffnung 13 überdeckenden Öffnung 16 auf, deren Querschnittsfläche geringer ist als die der Ringscheibenöffnung 13.

Die Außenwandung 9 der Dämpfungsringkammer 4 ist einstückig mit der Seitenwand 8 der Verbindungskammer 5 hergestellt und bildet deren Verlängerung.

Das freie Ende der Seitenwand 8 ist fluiddicht an der Stützplatte 1 durch Schraubverbindungen und/oder durch Aufvulkanisieren befestigt. Das freie Ende der Trennwand 11 ist auf entsprechende Weise zwischen den Ringscheibenöffnungen 13 und 14 an der Ringscheibe 7 als Boden der Verbindungskammer 5 befestigt, gegebenenfalls unter Mitwirkung einer gegebenenfalls auswechselbaren Düsenplatte 17.

Bei den Ausführungsbeispielen gemäß Fig. 1, 3 und 4 besteht die Seitenwand 8, die Außenwandung 9 und die Bodenwandung 10 des flexiblen Dämpfungsrings 3 aus einem praktisch nicht dehnbaren zerreißfesten Material, z. B. einem gummibeschichteten Gewebe. An der Übergangsstelle zur Trennwand 11 kann die Bodenwandung 10 innen und/oder außen Verstärkungsringe 18 (Fig. 1) vorzugsweise aus dem gleichen Material aufweisen. Die Trennwand 11 besteht aus einem leicht dehnbaren Gummi.

Das Ausführungsbeispiel gemäß Fig. 3 weist einen ähnlichen Aufbau, wie die in den Fig. 1 und 2 dargestellten, auf. Hierbei ist jedoch die Verbindungskammer 5 nur mit der Dämpfungsringkammer 4 verbunden, wobei die Verbindung der Dämpfungsringkammer 4 mit der Auftriebskammer 6 durch Öffnungen 14' in der Trennwand 11 erfolgt, so daß das Druckmittel, bevor es in die Auftriebskammer 6 gelangt, die Verbindungskammer 5 und die Dämpfungskammer 4 durchströmen muß. Zumindest auf einem wesentlichen Teil der inneren Bodenwandung 10 kann eine Schaumgummiauflage 19 (Fig. 3) aufgebracht sein, die zur Schwingungsdämpfung dient, aber die Auslenkung der Bodenwandung 10 in senkrechter Richtung nicht behindert.

In der Bodenwandung 10 können auch kleine durchgehende, vorzugsweise auf einem Umfangskreis in gleichen Abständen voneinander liegende Durchgangsbohrungen 20 (Fig. 3) vorgesehen sein.

Bei dem in Fig. 4 dargestellten Ausführungsbeispiel ist die Verbindungskammer 5 mit starren Seitenwänden 8' und einem starren Boden 7' ausgestaltet. Als Ringscheibe 7 kann eine Verlängerung des Befestigungsflansches der Seitenwand 8' vorgesehen sein. Außerdem besteht die Außenwandung 9 aus einem oberen und einem unteren Teil 21 bzw. 22, die an der Stelle des größten Umfangs durch obere und untere, in geringem Abstand voneinander angeordnete Ringklemmplatten 23 fluiddicht verbunden sind. Benachbarte Platten 23 können ineinander eingreifend (s. Fig. 5) angeordnet sein. Durch die Ringklemmplatten 23 wird die Wandung 9 an der Stelle, wo im Betrieb die größte Druckkraft aufzunehmen ist, verstärkt. Durch die Verwendung einzelner Ringklemmplatten 23 statt geschlossener Ringe wird einem Flattern und damit auch einer Geräuschbildung vorgebeugt.

Auf der Außenseite der Bodenwandung 10 kann zur Erhöhung der Verschleißfestigkeit eine abriebfeste Kunststoffschicht 24 (Fig. 4) aufgebracht sein.

Es ist auch möglich, die starre Verbindungskammer 5 als Haube oberhalb der Stützplatte 1 anzuordnen (nicht dargestellt), dann wären die Öffnungen 13 und 14 in der Stützplatte 1 vorzusehen. Hierdurch ließe sich lediglich durch Auswechseln der Haube der Abstand und die Exzentrizität der Druckmittelzufuhröffnung 12 in der Haube zur Öffnung 13 verändern.

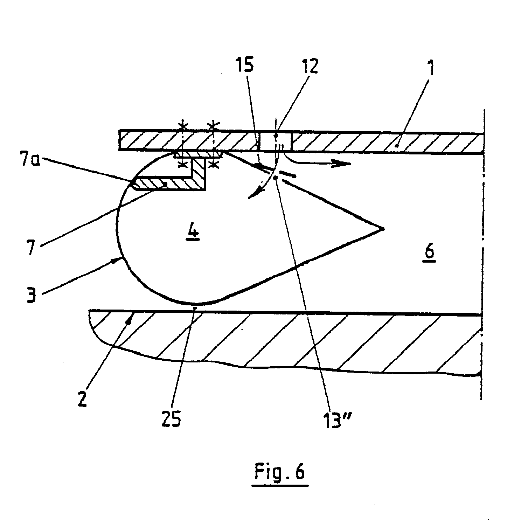

Bei dem in Fig. 6 dargestelltem Ausführungsbeispiel wird auf eine Verbindungskammer verzichtet. In diesem Fall wird das Druckmittel durch die Bohrung 12 in der Stützplatte 1 direkt in die Auftriebskammer 6 zugeführt. Direkt gegenüber dieser Bohrung 12 ist in der, hier aus einem Material bestehenden Wandung des Dämpfungsrings 3, der im Ruhezustand an der Stützplatte 1 anliegt, eine durch eine Drosselklappe 15 überdeckte Öffnung 13″ vorgesehen, durch die das Druckmittel in die Dämpfungsringkammer 4 eintreten kann. Durch diese Öffnung 13″ kommuniziert auch die Dämpfungsringkammer 4 mit der Auftriebskammer 6. Innerhalb der Dämpfungsringkammer 4 ist eine Ringscheibe 7 z. B. mittels Flanschverbindungen befestigt. Bei dieser Ausführung besteht die gesamte Wandung der blähbaren Dämpfungskammer 4 aus einem einheitlichen, praktisch undehnbarem, zerreißfestem Material. Es ist aber ebenso die Ausführung mit einem dehnbaren Wandungsteil analog zu den anderen beschriebenen Vorrichtungen möglich.

Die Vorrichtung gemäß Fig. 1 arbeitet wie folgt :

Ein durch die Bohrung 12 in die Verbindungskammer 5 zugeführtes Druckmittel breitet sich darin aus und gelangt durch die durch die Drosselklappe 15 mit der Drosselöffnung 16 überdeckte Öffnung 13 in der Ringscheibe 7 sowie durch den in der Ruhestellung (Fig. 1, rechte Hälfte) zwischen dem Außenrand 7a der Ringscheibe 7 und der einheitlichen Seitenwand 8 und Außenwandung 9 bestehenden Ringspalt in die Dämpfungskammer 4 und durch die Öffnung 14 direkt in die Auftriebskammer 6. In Abhängigkeit davon, ob der Ausgang der Druckmittelzuführung axial zur entsprechenden Bodenöffnung 13 bzw. Öffnung 13′ ist oder nicht und in welchem Höhenabstand sie voneinander angeordnet sind, sowie von der Größe der Drosselöffnung 16 strömt das Druckmittel langsamer oder schneller in die Dämpfungsringkammer 4 ein und bläht sie auf. Je kleiner der Abstand der Zufuhröffnung 12 des Druckmittels von der Eingangsöffnung 13 in die Dämpfungskammer 4 ist, ein desto größerer Hub läßt sich bei gleichbleibendem Druck des Druckmittels mit der Vorrichtung erzielen.

Mit zunehmendem Aufblähen des Dämpfungsrings 3 schließt sich der Ringspalt, und die einheitliche Seitenwand 8 und Außenwandung 9 liegt dichtend auf dem Außenrand 7a auf. Dann kommuniziert die Verbindungskammer 5 nur durch die Drosselöffnung 16 mit der Verbindungskammer 5. Gleichzeitig mit dem Aufblähen der Dämpfungsringkammer 4 gelangt aus der Verbindungskammer 5 durch die Öffnung(en) 14 und gegebenenfalls die Düsenplatte 17 Druckmittel in die Auftriebskammer 6. Beim Aufblähen der Dämpfungsringkammer 4 legt sich die Bodenwandung 10 als breiter annähernd paralleler Dichtungsring A gegen die Auflagefläche 2, so daß sich in der Auftriebskammer 6 Druck aufbauen kann. Der Druck in der Dämpfungsringkammer 4 wird durch die zerreißfeste Außenwandung 9 und Bodenwandung 10 aufgenommen. Die Seitenwand 8 ist ebenfalls zerreißfest. Auf der Trennwand 11 liegt, da im Betriebszustand durch die Verbindung der Dämpfungsringkammer 4 und der Auftriebskammer 6 ein Druckausgleich erfolgt, kein nennenswerter Druck. Bei einer entsprechenden Druckmittelzufuhr bildet sich dann zwischen der Bodenwandung 10 und der Auflagefläche 2 ein Spalt 25 durch einen austretenden Druckmittelfilm, der die zu transportierende Last schweben läßt. Der gebildete breite Abdichtungsring A, kann Unebenheiten der Auflagefläche 2 durch seine Auslenkbarkeit und damit seine Anpassungsfähigkeit (Anschmiegung) leicht ausgleichen.

Beim Überfahren einer Erhöhung in der Auflagefläche 2, erfolgt ein Druckanstieg in der Dämpfungsringkammer 4, der durch die Verbindung mit der Auftriebskammer 6 ausgeglichen wird. Dieser Druckausgleich wird beim Vorhandensein einer Drosselklappe 15 schneller erfolgen, da diese dann auslenkt und somit einen größeren Öffnungsquerschnitt freigibt. Im Falle eines stärkeren Druckabfalls kann sich auch die einheitliche Seitenwand 8 und Außenwand 9 vom Außenrand 7a lösen. Im Ergebnis erfolgt zwischen dem Dichtungsring A und der Auflagefläche 2 ein erhöhter Druckmittelaustritt. Nachdem die Erhöhung überfahren wurde, liegt in der Dämpfungsringkammer 4 ein geringer Druck vor, der durch den Ringspalt rasch wieder auf eine bestimmte Höhe aufgebaut wird. Durch die angelegte Drosselklappe 15 über der Öffnung 13 erfolgt dann der Druckaufbau langsamer und verzögert, und damit gedämpft, durch die kleinere Öffnung 16 in der Drosselklappe 15. Beim Überfahren einer Mulde in der Auflagefläche 2 laufen die gleichen Vorgänge umgekehrt ab.

Im Falle von rauhen und/oder mit Rissen versehenen Auflageflächen wird durch den breiten Abdichtungsring A eine Art Labyrintheffekt erzielt, so daß sich in der Auftriebskammer 6 der erforderliche Druck weiterhin aufbauen kann.

Durch diese Effekte können unebene, rauhe und rissige Gleitoberflächen mit einem minimalen Druckmittel- bzw. Energieverbrauch verkraftet werden. Da sich bei verschiedenen Durchflußmengen durch den Spalt 25 verschiedene Drücke in der Auftriebskammer 6 aufbauen, erzielt man einen regelbaren Hub in Funktion der Durchflußmenge. Je größer die Durchflußmenge ist, um so höher ist der Druck in der Auftriebskammer 6. Man kann so Lasten mit einer geringen Durchflußmenge unterfahren und nachher durch die Erhöhung der Durchflußmenge anheben und wegtransportieren.

Die Vorrichtung gemäß Fig. 2 arbeitet ebenso wie die gemäß Fig. 1.

Bei der Vorrichtung gemäß Fig. 3 gelangt das Druckmittel in die Verbindungskammer 5, aus der es durch die kalibrierte Öffnung 13 in der Ringscheibe 7 und den zunächst bestehenden und bei Füllung der Dämpfungsringkammer 4 schließenden Ringspalt zwischen dem Außenrand 7a und der einheitlichen Seitenwand 8 und Außenwandung 9 in die Dämpfungskammer 4 strömt. Von dort gelangt es durch die Bohrung(en) 14' in der Trennwand 11 in die Auftriebskammer 6 und im Betriebszustand auch durch die Bohrungen 20 in der Bodenwandung 10 in den gebildeten Spalt 25.

Bei der Vorrichtung gemäß Fig. 4 besteht eine starre Verbindungskammer 5 mit konstantem Volumen. Aus der Verbindungskammer 5 kann das Druckmittel nur durch die Öffnung 13' im Boden 7' in die Dämpfungskammer 4 strömen. Die Verbindungskammer 5 ist durch die Öffnung 14 direkt mit der Auftriebskammer 6 verbunden. Durch die Öffnungen 13' und 14 und die Verbindungskammer 5 kommunizieren die Dämpfungskammer 4 und die Auftriebskammer 6 miteinander.

Bei der in Fig. 6 dargestellten Vorrichtung liegt die durch eine auslenkbare Drosselklappe 15 überdeckte Öffnung 13'' in der Ruhestellung direkt gegenüber dem Ausgang der Bohrung 12 zur Zufuhr eines Druckmittels. Dadurch bläht sich bei Zufuhr des Druckmittels die Dämpfungsringkammer 4 auf, wobei sich zunehmend die Öffnung 13'' vom Ausgang der Bohrung 12 entfernt, so daß das Druckmittel auch in die Auftriebskammer 6 strömt und den Fluidfilm im Spalt 25 aufbaut.

Vorzugsweise ist in allen Vorrichtungen ein Ring 7 innerhalb der Dämpfungskammer 4 vorzusehen, dessen freiliegender Außenrand 7a einen Radius aufweist, der mindestens ebenso groß, vorzugsweise aber größer als der Radius der kreisförmigen Berührungslinie des Dämpfungsrings 3 an der Stützplatte 1 ist. Ein derartiger Ring verhindert, daß die Außenwandung 9 sich nach innen stülpen kann. Er bewirkt aber auch, daß im Falle eines « Festklebens » der Bodenwandung 10 an einer Unterlage 2 im Falle einer Störung die Richtung der Krafteinwirkung auf die Befestigung des Dämpfungsrings 3 an der Stützplatte 1 praktisch nicht verändert wird, der Zug der « klebenden » Bodenwandung wird durch den Ring 7 umgelenkt, so daß ein Abreißen des Dämpfungsrings 3 von der Stützplatte 1 weitgehend vermieden wird. Auch sind bei der Befestigung des Dämpfungsrings 3 an der Stützplatte 1 nur einseitig gerichtete Zugkräfte zu berücksichtigen.

Aus Stabilitätsgründen muß man unter einer lasttragenden Plattform mindestens drei Vorrichtungen anordnen, die bei exzentrischer Last verschieden belastet werden. Dadurch, daß der Abdichtungsring A in Abhängigkeit von der Belastung auslenkbar ist, entsteht ein selbstregulierender Effekt, der die verschiedenen Belastungen der einzelnen Vorrichtungen bis zu einer gewissen Grenze ausgleicht und deshalb keine Druckregelorgane für jede einzelne Vorrichtung benötigt.

Durch die erfindungsgemäße Gestaltung der Wandung der Dämpfungsringkammer 4 aus einem dehn- und einem nichtdehnbaren Teil kann diese ein sehr großes Volumen aufweisen, das sich im Betrieb weniger gering ändert, als es bei kleineren Kammern der Fall wäre, was zur Stabilität der Funktion beiträgt. Die Verbindungskammer 5 dient als die Stabilität fördernde Ausgleichskammer. Durch diese Maßnahmen werden Schwingungen, Hüpfeffekte und das Flattern von Wandungen der Dämpfungsringkammer vermieden. Durch die Durchgangsbohrungen 20 in der Bodenwandung 10 können kleine lokale Luftkissen gebildet werden, die als zusätzliche « Schmierung » dienen und im Falle von größeren Rissen die Funktionfähigkeit der Vorrichtung erhalten.

## Patentansprüche

1. Vorrichtung zum Tragen und Transportieren von Lasten mit einer Stützplatte (1) und einer Luftkisseneinrichtung, die aus einem flexiblen, durch Zufuhr eines Druckmittels aufblähbaren Dämpfungsring (3), der an der Stützplatte (1) entlang einer kreisförmigen Berührungslinie abgedichtet befestigt ist, und einer zwischen der Stützplatte (1), dem aufgeblähten Dämpfungsring (3) und Auflagefläche (2) gebildeten Auftriebskammer (6) besteht, wobei die Kammer (4) des Dämpfungsrings mindestens eine Öffnung (13) aufweist, durch die sie mit der Auftriebskammer (6) kommuniziert, aus der im Betriebszustand das Druckmittel zwischen dem Dämpfungsring (3) und der Auflagefläche (2) einen Fluidfilm bildend austritt, dadurch gekennzeichnet, daß der Teil der Wandung des Dämpfungsrings (3), der die seitliche Trennwand (11) zur Auftriebskammer (6) bildet, dehnbar und die restliche Wandung (9, 10) nur wenig oder gar nicht dehnbar ist.

2. Vorrichtung nach Anspruch 1, dadurch gekennzeichnet, daß der Teil der Wandung (10) des aufgeblähten Dämpfungsrings (3), der der Auflagefläche (2) gegenüberliegt, aus einer in etwa parallel zu ihr liegenden breiten auslenkbaren ringscheibenförmigen Abdichtungsfläche (A) besteht.

3. Vorrichtung nach Anspruch 1 oder 2, dadurch gekennzeichnet, daß zentrisch innerhalb der Dämpfungsringkammer (4) im gleichen Abstand zur Stützplatte (1) ein Ring (7) befestigt ist, wobei der Radius seines freien Außenrands (7a) gleich oder größer als der der kreisförmigen Berührungslinie des Dämpfungsrings (3) an der Stützplatte (1) ist.

4. Vorrichtung nach einem der Ansprüche 1 bis 3, dadurch gekennzeichnet, daß die Druckmittelzufuhr in die Dämpfungsringkammer (4) und die Auftriebskammer (6) und deren Verbindung untereinander durch eine Verbindungskammer (5) mit entsprechenden Öffnungen (13, 13', 14, 14') erfolgt.

5. Vorrichtung nach Anspruch 4, dadurch gekennzeichnet, daß die Verbindungskammer (5) unterhalb der Stützplatte (1) angeordnet ist und daß die dehnbare Trennwand (11) derart an der Verbindungskammer (5) abgedichtet befestigt ist, daß deren Boden einen Teil der Wandung der Dämpfungsringkammer (4) bildet.

6. Vorrichtung nach Anspruch 4 oder 5, dadurch gekennzeichnet, daß die Seitenwand (8) der Verbindungskammer (5) eine Verlängerung der Außenwandung (9) des Dämpfungsrings (3) ist.

7. Vorrichtung nach einem der Ansprüche 4 bis 6, dadurch gekennzeichnet, daß der Boden der Verbindungskammer (5) durch den scheibenförmig gestalteten Ring (7) gebildet wird, an dessen Außenrand (7a) die durch die Seitenwand (8) der Verbindungskammer (5) verlängerte seitliche Außenwandung (9) im Falle der geblähten Dämpfungsringkammer (3) dichtend anliegt.

8. Vorrichtung nach einem der Ansprüche 1 bis 7, dadurch gekennzeichnet, daß der Abstand der Böhrung (12) zur Druckmittelzufuhr zur Öffnung (13) in der Dämpfungsringkammer (4) unabhängig von der Druckmittelzufuhr verstellbar ist.

9. Vorrichtung nach einem der Ansprüche 1 bis 8, dadurch gekennzeichnet, daß die Wandungen (9, 10, 11) des Dämpfungsrings (3) aus dem gleichen elastischen Material bestehen und die Dehnbarkeit der Trennwand (11) durch Materialverdünnung erzeugt ist.

10. Vorrichtung nach einem der Ansprüche 1 bis 9, dadurch gekennzeichnet, daß die Öffnung (13, 13') in der Dämpfungsringkammer (4), durch die das Druckmittel in sie einströmt, durch eine bei Überdruck in der Dämpfungsringkammer (4) auslenkbare Drosselklappe (15) mit kleinerer Öffnung (16) überdeckt ist.

11. Vorrichtung nach einem der Ansprüche 1 bis 10, dadurch gekennzeichnet, daß die wenig oder nicht dehnbare Außenwandung (9) der Dämpfungsringkammer (4) aus einem oberen und einem unteren Teil (21 bzw. 22) besteht, die an ihren Umfangskanten durch obere und untere im Abstand voneinander angeordnete Ringklemmplatten (23) fluiddicht verbunden sind.

12. Vorrichtung nach einem der Ansprüche 1 bis 11, dadurch gekennzeichnet, daß die Dämpfungsringkammer (4) Durchgangsbohrungen (20) geringen Durchmessers aufweist, die derart angeordnet sind, daß sie im geblähten Zustand des Dämpfungsrings (3) der Auflagefläche (2) gegenüberliegen.

13. Vorrichtung nach einem der Ansprüche 1 bis 12, dadurch gekennzeichnet, daß im Inneren der Dämpfungsringkammer (4) im Bereich der im geblähten Zustand der Auflagefläche gegenüberliegt, eine ganz oder teilweise diesen Bereich überdeckende Schaumgummiauflage (19) angeordnet ist.

14. Vorrichtung nach einem der Ansprüche 1 bis 13, dadurch gekennzeichnet, daß auf der Außenseite der Bodenwandung (10) eine abriebfeste Kunststoffschicht (24) aufgebracht ist.

## Claims

1. Apparatus for carrying and transporting loads, with a loading plate (1) and air cushion means, comprising a flexible damping ring (3), which can be inflated by supplying a pressure medium to it and is sealingly fixed on the loading plate (1) along a circular line of contact, and a buoyancy chamber (6), formed between the loading plate (1), the inflated damping ring (3) and the support surface (2), the chamber (4) of the damping ring having at least one orifice (13) through which it communicates with the byoyancy chamber (6), from which, in the operational state, the pressure medium discharges between the damping ring (3) and the support surface (2) while forming a fluid film, characterised in that the part of the wall of the damping ring (3), forming the lateral bulkhead (11) with the buoyancy chamber (6) is extensible and the remaining wall (9, 10) is not extensible or only slightly so.

2. Apparatus according to Claim 1, characterised in that part of the wall (10) associated with the inflated damping chamber (3) and situated opposite the support surface (2) comprises a broad deflectable sealing surface (A) of annular disc form, situated approximately parallel with said support surface.

3. Apparatus according to Claim 1 or 2, characterised in that a ring (7) is mounted centrally within the damping ring chamber (4) at a uniform distance from the loading plate (1), the radius of the free external rim (7a) of said ring being equal to or greater than that of the circular line of contact of the damping ring (3) on the loading plate (1).

4. Apparatus according to any of the Claims 1 to 3, characterised in that the supply of pressure medium into the damping chamber (4) and into the buoyancy chamber (6) and into the mutual interconnection is provided by a connecting chamber (5) having appropriate orifices (13, 13', 14, 14').

5. Apparatus according to Claim 4, characterised in that the connecting chamber (5) is disposed below the loading plate (1) and that the extenstble bulkhead (11) is sealingly fixed to the connecting chamber (5), so that the base thereof forms part of the wall of the damping ring chamber (4).

6. Apparatus according to Claim 3 or 4, characterised in that the side wall (8) of the connecting chamber (5) is an extension of the external wall (9) associated with the damping ring (3).

7. Apparatus according to any of the Claims 4 to 6, characterised in that the base of the connecting chamber (5) is formed by the disc-shaped ring (7) on whose external rim (7a) the lateral external wall (9), which is extended by the side wall (8) of the connecting chamber (5), is adapted to bear sealingly when the damping ring chamber (3) is inflated.

8. Apparatus according to any of the Claims 1 to 7, characterised in that the distance of the bore (12), through which pressure medium is supplied to the orifice (13) in the damping chamber (4), is adjustable, independently of the supply of pressure medium.

9. Apparatus according to any of the Claims 1 to 8, characterised in that the walls (9, 10, 11) of the damping ring (3) consist of the same elastic material and the extensibility of the bulkhead (11) is produced by thinning of the material.

10. Apparatus according to any of the Claims 1 to 9, characterised in that the orifice (13, 13') in the damping ring chamber (4), through which said orifice the pressure medium flows into said damping ring chamber, is covered by a throttle flap (15) with a smaller orifice (16), which said flap is deflectable by positive pressure in the damping ring chamber (4).

11. Apparatus according to any of the Claims 1 to 10, characterised in that the sligtly extensible or non-extensible external wall (9) of the damping chamber (4) comprises an upper part and a lower part (21 and 22 respectively) which are joined in fluid-tight manner along their circumferential edges by means of annular clamping plates (23) which are disposes at a distance from each other.

12. Apparatus according to any of the Claims 1 to 11, characterised in that the damping ring chamber (4) is provided with open bores having a small diameter and being so arranged, that they are disposed opposite the support surface (2) when the damping ring (3) is in the inflated state.

13. Apparatus according to any of the Claims 1 to 12, characterised in that a foam rupper support (19) adapted to wholly or partially cover the region situated opposite to the support surface in the inflated state, is disposed in the interior of the damping ring chamber (4).

14. Apparatus according to any of the Claims 1 to 13, characterised in that an abrasion-resistant plastics stratum (24) is applied to the outside of the bottom wall (10).

**Revendications**

1. Dispositif pour porter et transporter des charges, comportant une plaque de chargement (1) et un agencement à coussin d'air, qui est constitué par un anneau d'amortissement (3) souple, gonflable par amenée d'un agent de pression, qui est fixé de manière étanche sur la plaque de chargement (1) le long d'une ligne de contact circulaire, et une chambre de sustentation (6) formée entre la plaque de chargement (1), l'anneau d'amortissement (3) gonflé et la surface d'appui (2), la chambre (4) de l'anneau d'amortissement présentant au moins une ouverture (13) par laquelle elle communique avec la chambre de sustentation (6), à partir de laquelle, en état de fonctionnement, l'agent de pression s'échappe entre l'anneau d'amortissement (3) et la surface d'appui (2), en formant une pellicule de fluide, caractérisé en ce que la partie de la paroi de l'anneau d'amortissement (3) qui forme la cloison latérale (11) vers la chambre de sustentation (6), est extensible et la paroi restante (9, 10) n'est que peu ou pas extensible.

2. Dispositif suivant la revendication 1, caractérisé en ce que la partie de la paroi (10) de l'anneau d'amortissement (3) gonflé, qui est opposée à la surface d'appui (2), est constituée par une surface d'étanchéité (A) en forme de disque annulaire large déformable, située approximativement parallèlement à cette surface.

3. Dispositif suivant la revendication 1 ou 2, caractérisé en ce qu'au centre à l'intérieur de la chambre (4) de l'anneau d'amortissement, avec un écartement uniforme par rapport à la plaque de chargement (1), est fixé un anneau (7), le rayon de son bord externe libre (7a) étant égal ou supérieur à celui de la ligne de contact circulaire de l'anneau d'amortissement (3) sur la plaque de chargement (1).

4. Dispositif suivant une des revendications 1 à 3, caractérisé en ce que l'alimentation en agent de pression dans la chambre (4) de l'anneau d'amortissement et la chambre de sustentation (6) et leur liaison mutuelle a lieu par l'intermédiaire d'une chambre de liaison (5) avec des ouvertures (13, 13', 14, 14') correspondantes.

5. Dispositif suivant la revendication 4, caractérisé en ce que la chambre de liaison (5) est située en dessous de la plaque de chargement (1), et en ce que la cloison extensible (11) est fixée de manière étanche à la chambre de liaison (5) d'une manière telle que son fond forme une partie de la paroi de la chambre (4) de l'anneau d'amortissement.

6. Dispositif suivant la revendication 4 ou 5, caractérisé en ce que la paroi latérale (8) de la chambre de liaison (5), est un prolongement de la paroi externe (9) de l'anneau d'amortissement (3).

7. Dispositif suivant une des revendications 4 à 6, caractérisé en ce que le fond de la chambre de liaison (5) est formé par l'anneau (7) réalisé en forme de disque, sur le bord externe (7a) duquel s'applique de manière étanche la paroi externe latérale (9) prolongée par la paroi latérale (8) de la chambre de liaison (5), dans le cas où la chambre de l'anneau d'amortissement (3) est gonflée.

8. Dispositif suivant une des revendications 1 à 7, caractérisé en ce que l'écartement entre l'alésage (12) pour l'amenée de l'agent de pression, et l'ouverture (13) dans la chambre (4) de l'anneau d'amortissement est réglable indépendamment de l'alimentation en agent de pression.

9. Dispositif suivant une des revendications 1 à 8, caractérisé en ce que les parois (9, 10, 11) de l'anneau d'amortissement (3) sont faites de la même matière élastique et l'extensibilité de la cloison (11) est obtenue par amincissement de la matière.

10. Dispositif suivant une des revendications 1 à 9, caractérisé en ce que l'ouverture (13, 13') dans la chambre (4) de l'anneau d'amortissement, par laquelle l'agent de pression y pénètre, est recouverte par un clapet d'étranglement (15) avec une plus petite ouverture (16), pouvant être écarté lors d'une surpression dans la chambre (4) de l'anneau d'amortissement.

11. Dispositif suivant une des revendications 1 à 10, caractérisé en ce que la paroi externe (9) peu ou pas extensible de la chambre (4) de l'anneau d'amortissement, est constituée par une partie supérieure et une partie inférieure (21 et 22), qui sont reliées de manière étanche au fluide sur leurs bords périphériques, par des plaques de serrage annulaires (23) supérieure et inférieure disposées avec un écartement mutuel.

12. Dispositif suivant une des revendications 1 à 11, caractérisé en ce que la chambre (4) de l'anneau d'amortissement présente des alésages de passage (20) de petit diamètre, qui sont situés de telle sorte qu'ils fassent face dans l'état gonflé de l'anneau d'amortissement (3), à la surface d'appui (2).

13. Dispositif suivant une des revendications 1 à 12, caractérisé en ce qu'à l'intérieur de la chambre (4) de l'anneau d'amortissement, dans la zone qui, à l'état gonflé, fait face à la surface d'appui, est disposé un appui en caoutchouc mousse (19) recouvrant totalement ou partiellement cette zone.

14. Dispositif suivant une des revendications 1 à 13, caractérisé en ce que sur la face externe de la paroi de fond (10) est appliquée une couche de matière synthétique (24) résistant à l'abrasion.

Fig. 1

0 118 464

Fig. 2

Fig. 3

2

Fig. 4

Fig. 5

Fig. 6

4